# EUROPEAN PATENT SPECIFICATION

(11) **EP 4 134 250 B1**
(45) Date of publication and mention of the grant of the patent: **24.01.2024**
(21) Application number: 22187379.7
(22) Date of filing: 28.07.2022
(51) Int. Cl.: B60C 11/03, B60C 11/12, B60C 11/04

(54) **TIRE**
REIFEN
PNEUMATIQUE

(30) Priority: 10.08.2021 JP 2021130865
(43) Date of publication of application: 15.02.2023
(73) Proprietor: Sumitomo Rubber Industries, Ltd., Kobe-shi, Hyogo-ken 651-0072 (JP)
(72) Inventor: ITO, Shuhei, Hyogo, 651-0072 (JP)
(74) Representative: Manitz Finsterwald Patent- und Rechtsanwaltspartnerschaft mbB

(56) References cited:
- EP-A1- 3 492 283
- EP-A1- 3 974 208
- WO-A1-2013/150143
- WO-A1-2017/176280

## Description

### BACKGROUND OF THE INVENTION

### Field of the Invention

The present invention relates to a tire.

### Background Art

Japanese Laid-Open Patent Publication No. 2018-202956 discloses a pneumatic tire having a plurality of rib-like land portions formed by at least four circumferential grooves. The circumferential grooves include outermost circumferential grooves disposed on the outermost sides in the tire width direction, and inner adjacent circumferential grooves that are disposed adjacent to and inward of the outermost circumferential grooves in the tire width direction. Each rib-like land portion has a protrusion that protrudes from the side wall surface thereof and extends in the tread circumferential direction. The protrusion in the inner adjacent circumferential groove is formed at a shallow position that is closer to the tread surface than the protrusion in the outermost circumferential groove is. Such a pneumatic tire is considered to exhibit enhanced wet grip performance and inhibit enhancement of rolling resistance.

In recent years, rolling resistance performance and wet grip performance have been required to be further enhanced.
WO 2017/176280 A1 discloses a tire comprising the features according the preamble of claim 1. EP 3 974 208 A1 being published after the priority date of the present application discloses a tire including features according to a related technology.
EP 3 492 283 A1 discloses a tire comprising a tread portion in which, in a groove bottom of circumferential grooves, a circumferential sipe extending inwardly from the groove bottom in a tire radial direction and a circumferential width-increased portion are formed which extends inwardly from the circumferential sipe in the tire radial direction and which extends in the tire circumferential direction with a width greater than a width of the circumferential sipe.
WO 2013/150143 A1 discloses a tire including features according to a related technology.

The present invention has been made in view of the aforementioned circumstances, and a main object of the present invention is to provide a tire that exhibits excellent rolling resistance performance and wet grip performance.

### SUMMARY OF THE INVENTION

This object is satisfied by a tire comprising the features of claim 1. Subclaims are directed to preferable embodiments.

The tire includes a tread portion. The tread portion includes a plurality of circumferential grooves extending continuously in a tire circumferential direction. The circumferential grooves include a pair of shoulder circumferential grooves, and at least one middle circumferential groove disposed between the pair of shoulder circumferential grooves. A groove depth of the middle circumferential groove is less than a groove depth of each of the shoulder circumferential grooves. In a groove bottom of the middle circumferential groove, a circumferential sipe extending inwardly from the groove bottom in a tire radial direction, and a circumferential width-increased portion extending inwardly from the circumferential sipe in the tire radial direction and extending in the tire circumferential direction with a width greater than a width of the circumferential sipe, are formed.

The tire of the present invention has the above-described structures, and thus exhibits excellent rolling resistance performance and wet grip performance.

### BRIEF DESCRIPTION OF THE DRAWINGS

FIG. 1 is a plan view of a tire according to one embodiment of the present invention;
FIG. 2 is a cross-sectional view taken along a line A-A in FIG. 1; and
FIG. 3 is a perspective cross-sectional view of a middle circumferential groove.

### DETAILED DESCRIPTION

One embodiment of the present invention will be described below with reference to the drawings.

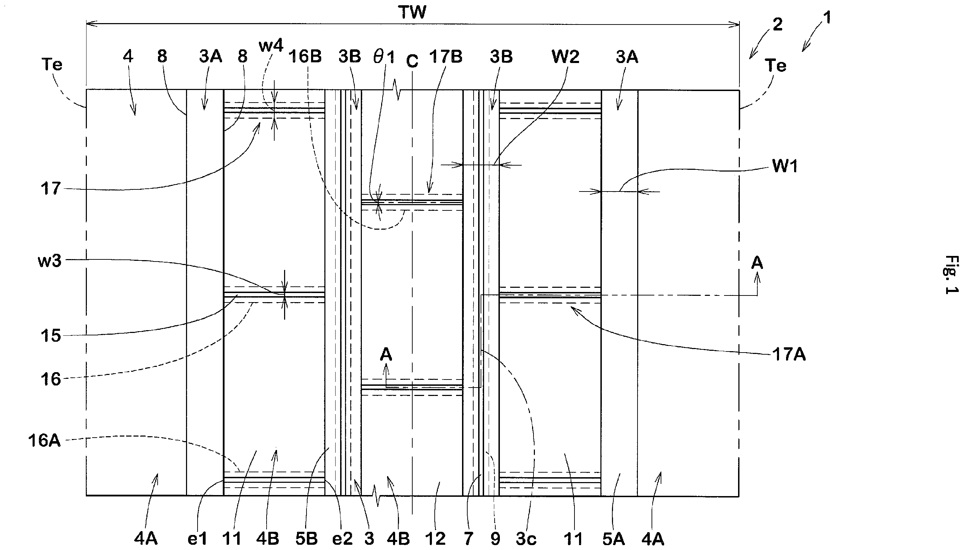

FIG. 1 is a plan view of a tread portion 2 of a tire 1 according to the present embodiment. The tire 1 of the present embodiment is preferably used as a heavy-duty pneumatic tire. However, the present invention can also be adopted for the tire 1 for passenger cars and light trucks or airless tires which are not filled with air.

As shown in FIG. 1, in the present embodiment, the tread portion 2 includes a plurality of circumferential grooves 3 extending continuously in the tire circumferential direction and land portions 4 demarcated by the circumferential grooves 3. In the present embodiment, the circumferential grooves 3 include a pair of shoulder circumferential grooves 3A and at least one middle circumferential groove 3B disposed between the paired shoulder circumferential grooves 3A. In the present embodiment, the land portions 4 include a pair of outer land portions 4A disposed outward of the pair of shoulder circumferential grooves 3A in the tire axial direction, and two or more inner land portions 4B demarcated by the middle circumferential groove 3B between the paired shoulder circumferential grooves 3A. A higher ground contact pressure acts on the inner land portions 4B as compared with the outer land portions 4A during straight running.

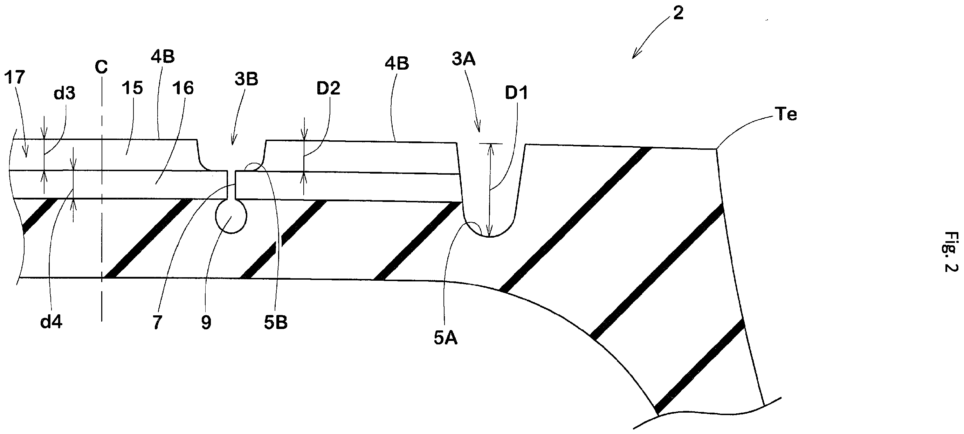

FIG. 2 is a cross-sectional view taken along a line A-A in FIG. 1. As shown in FIG. 2, a groove depth D2 of the middle circumferential groove 3B is formed so as to be less than a groove depth D1 of the shoulder circumferential groove 3A. Thus, stiffness of the inner land portions 4B disposed adjacent to the middle circumferential groove 3B is maintained to be high, and deformation of the inner land portion 4B during running with the tire is reduced, thereby enhancing rolling resistance performance.

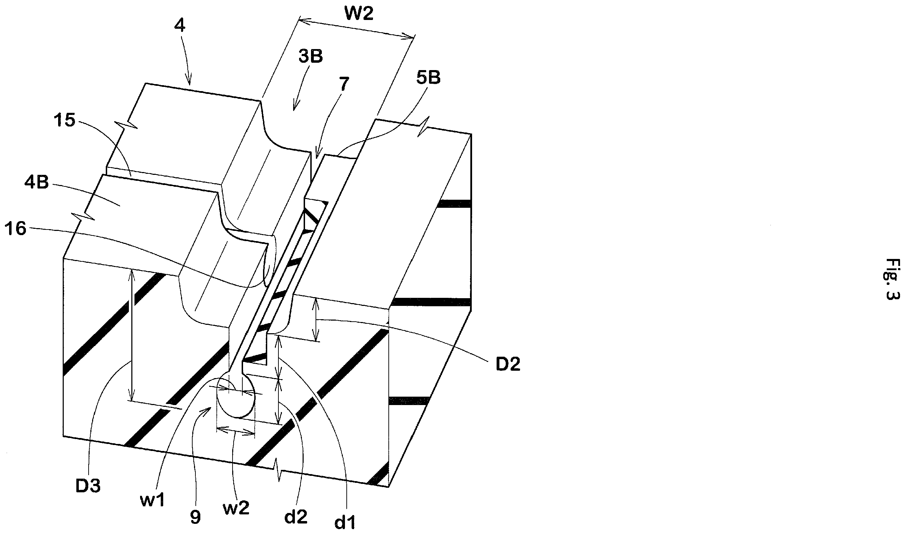

FIG. 3 is a perspective cross-sectional view of the middle circumferential groove 3B. As shown in FIG. 2 and FIG. 3, in a groove bottom 5B of the middle circumferential groove 3B, a circumferential sipe 7 and a circumferential width-increased portion 9 are formed. In the present embodiment, the circumferential sipe 7 extends inwardly from the groove bottom 5B in the tire radial direction. In the present embodiment, the circumferential width-increased portion 9 extends inwardly from the circumferential sipe 7 in the tire radial direction, and extends in the tire circumferential direction with a width w2 greater than a width of the circumferential sipe 7. Thus, reduction of an amount of water drained by the middle circumferential groove 3B having a relatively small groove depth can be compensated for, whereby excellent rolling resistance performance and wet grip performance are exhibited. Particularly, the circumferential width-increased portion 9 allows enhancement of wet grip performance at an end stage of wear at which the circumferential width-increased portion 9 comes into contact with a road surface. In the description herein, "sipe" refers to a cut-like portion in which the width orthogonal to the longitudinal direction is not greater than 1.5 mm. "Groove" refers to a groove-like portion in which the groove width orthogonal to the longitudinal direction is greater than 1.5 mm.

As shown in FIG. 1, in the present embodiment, the tread portion 2 has two middle circumferential grooves 3B. Thus, the inner land portions 4B include a pair of first inner land portions 11 each demarcated by the shoulder circumferential groove 3A and the middle circumferential groove 3B, and a second inner land portion 12 demarcated by the two middle circumferential grooves 3B. The number of the middle circumferential grooves 3B may be greater than or equal to three.

For example, the middle circumferential grooves 3B are preferably disposed in a range defined from the tire equator C toward both sides in the tire axial direction so as to be less than or equal to 35% of a tread width TW. Thus, a water film at the land portion 4 near the tire equator C from which water is not easily drained can be effectively discharged. In a case where the tread portion 2 has the two middle circumferential grooves 3B, the middle circumferential grooves 3B are preferably disposed in a range that is distant by 20% or more of the tread width TW from the tire equator C toward both the sides in the tire axial direction.

In the description herein, the tread width TW represents a distance in the tire axial direction between tread ends Te of the tire 1 in the normal state.

The "normal state" represents a state in which the tire 1 is mounted on a normal rim (not shown) and is inflated to a normal internal pressure and no load is applied to the tire 1, in a case where various standards are defined for the tire 1. For the tires 1 for which various standards are not defined, the normal state represents a standard use state, corresponding to a purpose of use of the tire 1, in which the tire 1 is not mounted to a vehicle and no load is applied to the tire 1. In the description herein, unless otherwise specified, dimensions and the like of components of the tire 1 are represented by values measured in the normal state.

The "normal rim" represents a rim that is defined by a standard, in a standard system including the standard on which the tire is based, for each tire, and is, for example, "standard rim" in the JATMA standard, "Design Rim" in the TRA standard, or "Measuring Rim" in the ETRTO standard.

The "normal internal pressure" represents an air pressure that is defined by a standard, in a standard system including the standard on which the tire is based, for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

In the description herein, the tread ends Te represent the outermost ground contact positions in the tire axial direction in a state where the normal load is applied to the tire 1 in the normal state and the tire 1 is in contact with a plane at a camber angle of 0°.

The shoulder circumferential groove 3A is preferably disposed in a range defined from the tire equator C toward the outer side in the tire axial direction so as to be less than or equal to 37.5% of the tread width TW. Thus, stiffness of the outer land portion 4A is assured and degradation of rolling resistance performance is inhibited.

In the present embodiment, the shoulder circumferential grooves 3A and the middle circumferential grooves 3B linearly extend. Thus, drainage resistance is reduced and wet grip performance can be enhanced. In the shoulder circumferential groove 3A and the middle circumferential groove 3B, groove edges 8, 8 on both sides linearly extend. For example, the shoulder circumferential groove 3A and the middle circumferential groove 3B may extend in a wavy manner or zigzag.

The groove width W2 of the middle circumferential groove 3B is, but is not particularly limited to, preferably not less than 80% of a groove width W1 of the shoulder circumferential groove 3A and more preferably not less than 90% thereof, and preferably not greater than 120% thereof and more preferably not greater than 110% thereof. The groove depth D1 (shown in FIG. 2) of the shoulder circumferential groove 3A is, for example, 11.0 to 20.0 mm.

In FIG. 2, in a case where the groove depth D2 of the middle circumferential groove 3B is excessively less than the groove depth D1 of the shoulder circumferential groove 3A, wet grip performance may be degraded. Therefore, the groove depth D2 of the middle circumferential groove 3B is preferably not less than 30% of the groove depth D1 of the shoulder circumferential groove 3A and more preferably not less than 40% thereof, and preferably not greater than 60% thereof and more preferably not greater than 50% thereof. The groove depth D2 of the middle circumferential groove 3B is, for example, preferably 3.0 to 12.0 mm.

In the present embodiment, a cross-sectional area A2 of the middle circumferential groove 3B is 20% to 60% of a cross-sectional area A1 of the shoulder circumferential groove 3A. Since the cross-sectional area A2 of the middle circumferential groove 3B is not less than 20% of the cross-sectional area A1 of the shoulder circumferential groove 3A, wet grip performance is assured. Since the cross-sectional area A2 of the middle circumferential groove 3B is not greater than 60% of the cross-sectional area A1 of the shoulder circumferential groove 3A, high stiffness of the inner land portion 4B can be assured. From such a viewpoint, the cross-sectional area A2 of the middle circumferential groove 3B is more preferably not less than 30% of the cross-sectional area A1 of the shoulder circumferential groove 3A and more preferably not greater than 50% thereof.

In the present embodiment, the circumferential sipe 7 is disposed only in the groove bottom 5B of the middle circumferential groove 3B. In other words, the shoulder circumferential groove 3A (groove bottom 5A of the shoulder circumferential groove 3A) does not have the circumferential sipe 7 and the circumferential width-increased portion 9. Thus, land portion stiffness is maintained in the outer land portion 4A and the inner land portion 4B on which a relatively high ground contact pressure acts, in a well-balanced manner, and degradation of rolling resistance performance is inhibited.

As shown in FIG. 3, a depth d1 of the circumferential sipe 7 is preferably 0.5 to 2.0 times a depth d2 of the circumferential width-increased portion 9. Since the depth d1 of the circumferential sipe 7 is not less than 0.5 times the depth d2 of the circumferential width-increased portion 9, stiffness of the inner land portion 4B can be further enhanced while a groove volume of the circumferential width-increased portion 9 is maintained. Since the depth d1 of the circumferential sipe 7 is not greater than 2.0 times the depth d2 of the circumferential width-increased portion 9, a groove volume of the circumferential width-increased portion 9 can be enhanced while stiffness of the inner land portion 4B is maintained. The depth d1 of the circumferential sipe 7 is, for example, preferably 40% to 80% of the groove depth D2 of the middle circumferential groove 3B.

In the present embodiment, the circumferential sipe 7 is disposed at a position at which the groove bottom 5B has the maximum depth. Thus, water entering the groove smoothly flows into the circumferential width-increased portion 9, whereby wet grip performance can be further enhanced. The circumferential sipe 7 is, for example, disposed at a groove center line 3c of the middle circumferential groove 3B (shown in FIG. 1).

The width w2 of the circumferential width-increased portion 9 is, but is not particularly limited to, preferably not less than 150% of a width w1 of the circumferential sipe 7 and more preferably not less than 200% thereof, and preferably not greater than 400% thereof and more preferably not greater than 350% thereof.

The width w2 of the circumferential width-increased portion 9 is, for example, formed so as to be less than the groove width W2 of the middle circumferential groove 3B. Thus, stiffness of the inner land portion 4B is maintained and rolling resistance performance is enhanced. If the width w2 of the circumferential width-increased portion 9 is excessively small, an effect of enhancing wet grip performance may be reduced. Therefore, the width w2 of the circumferential width-increased portion 9 is, for example, preferably not less than 20% of the groove width W2 of the middle circumferential groove 3B and more preferably not less than 30% thereof, and preferably not greater than 65% thereof and more preferably not greater than 55% thereof.

A cross-sectional area A3 of the circumferential width-increased portion 9 is preferably not less than 8% of the cross-sectional area A1 of the shoulder circumferential groove 3A and more preferably not less than 12% thereof, and preferably not greater than 24% thereof and more preferably not greater than 20% thereof. Thus, the above-described effects are effectively exhibited.

The cross-section of the circumferential width-increased portion 9 has an ellipsoidal shape. Thus, stiffness of each land portion 4 is maintained to be high. The shape of the circumferential width-increased portion 9 is not limited to such a shape, and may be, for example, round, rectangular, or triangular.

A groove depth D3 of the total of the depths of the middle circumferential groove 3B, the circumferential sipe 7, and the circumferential width-increased portion 9 is preferably greater than the groove depth D1 of the shoulder circumferential groove 3A. Since the groove depth D3 is greater than the groove depth D1 of the shoulder circumferential groove 3A, reduction of stiffness of the outer land portion 4A is particularly inhibited, and balance with stiffness of the inner land portion 4B is maintained, whereby an effect of inhibiting degradation of rolling resistance performance is exhibited.

As shown in FIG. 1, at least one of the inner land portions 4B includes an axial sipe 15 extending in the tire axial direction, and an axial width-increased portion 16 extending inwardly from the axial sipe 15 in the tire radial direction and extending in the tire axial direction with a width w4 greater than a width of the axial sipe 15. The axial sipe 15 and the axial width-increased portion 16 having such structures enhance wet grip performance. In the description herein, the axial sipe 15 and the axial width-increased portion 16 are collectively referred to as an axial groove portion 17.

The axial groove portion 17 is, for example, disposed in the first inner land portions 11 and the second inner land portion 12. Axial groove portions 17A of the first inner land portions 11 and axial groove portions 17B of the second inner land portion 12 are aligned in the tire circumferential direction. In the present embodiment, the axial groove portions 17 are not disposed in the outer land portions 4A.

The axial groove portions 17A of the pair of first inner land portions 11 are, for example, disposed at the same positions in the tire circumferential direction. Each axial groove portion 17B of the second inner land portion 12 is displaced from the axial groove portion 17A of the first inner land portion 11 by half a pitch in the tire circumferential direction. The positions at which the axial groove portions 17A and the axial groove portions 17B are disposed are not limited to such positions.

In the present embodiment, the axial sipe 15 is continuous with the shoulder circumferential groove 3A or the middle circumferential groove 3B. In other words, the axial groove portion 17 is continuous with the shoulder circumferential groove 3A or the middle circumferential groove 3B. Thus, water in the axial groove portion 17 is discharged into the shoulder circumferential groove 3A or the middle circumferential groove 3B, whereby wet grip performance is further enhanced.

The axial sipe 15 is, for example, disposed at an angle θ1 of not greater than 30° relative to the tire axial direction. In other words, the axial groove portion 17 is disposed at an angle θ1 of not greater than 30° relative to the tire axial direction. Thus, stiffness of the inner land portion 4B in the tire axial direction is maintained to be high, and rolling resistance performance is enhanced.

The width w4 of the axial width-increased portion 16 is, but is not particularly limited to, preferably 2.0 to 4.0 times a width w3 of the axial sipe 15.

As shown in FIG. 2 and FIG. 3, a depth d3 of the axial sipe 15 is preferably 90% to 110% of the groove depth D2 of the middle circumferential groove 3B. Thus, in a period from a time when the tire 1 is new to an initial stage of wear at which the middle circumferential groove 3B exists, reduction of stiffness of the inner land portion 4B is inhibited by the axial sipe 15, and wet grip performance is maintained by the middle circumferential groove 3B. Therefore, in the present embodiment, the depth d3 of the axial sipe 15 is equal to the groove depth D2 of the middle circumferential groove 3B.

In the present embodiment, the axial width-increased portion 16 is continuous with the circumferential sipe 7 or the shoulder circumferential groove 3A. As shown in FIG. 1, in an axial width-increased portion 16A of the first inner land portion 11, for example, an outer end e1 in the tire axial direction is continuous with the shoulder circumferential groove 3A and an inner end e2 is continuous with the circumferential sipe 7. Both ends of an axial width-increased portion 16B of the second inner land portion 12 are continuous with the circumferential sipes 7.

As shown in FIG. 2, a depth d4 of the axial width-increased portion 16 is preferably 90% to 110% of the depth d1 of the circumferential sipe 7. Thus, at an intermediate stage of wear from a time after disappearance of the middle circumferential groove 3B to disappearance of the circumferential sipe 7, stiffness of the inner land portion 4B is maintained to be high by the circumferential sipe 7 and wet grip performance is enhanced by the axial width-increased portion 16. Therefore, in the present embodiment, the depth d4 of the axial width-increased portion 16 is equal to the depth d1 of the circumferential sipe 7.

In the present embodiment, the outer land portion 4A is formed as a plain land portion having no sipes and grooves. The outer land portion 4A having such a structure has high stiffness and enhances rolling resistance performance. The outer land portion 4A is not limited to such a structure. For example, the outer land portion 4A may include a shoulder lateral groove (not shown) having a groove depth of not greater than 2 mm.

Although the tire according to one embodiment of the present invention has been described in detail above, the present invention is not limited to the above-described specific embodiment, and various modifications can be made to implement the technique of the present invention within the scope of the appended claims.

### Examples

Tires having the basic pattern shown in FIG. 1 were produced. For each test tire, wet grip performance and rolling resistance performance were tested. Specifications common to the test tires and test methods were as follows.
Tire size: 315/70R22.5
Normal rim: 22.5×9.00
Tire internal pressure: 900 kPa
Groove depth D1 of shoulder circumferential groove: 14.5 mm

### <Rolling resistance performance>

Rolling resistance performance was evaluated according to ECE R117-02 (ECE Regulation No. 117 Revision 2). The rolling resistance performance was evaluated by rolling resistance obtained when running with the test tire was performed on a pseudo road surface of an indoor drum tester. The evaluation is indicated as an index with rolling resistance value in comparative example 1 being 100. In the results, the less the value is, the more excellent rolling resistance performance is.
Load: 31.25 kN
Running speed: 80 km/h

### <Wet grip performance>

Wet grip performance was evaluated according to ECE R117-02. The wet grip performance was evaluated by a braking distance obtained when the test tires were mounted to a vehicle described below and the vehicle was caused to run on a road surface having specifications described below. The evaluation is indicated as an index with a braking distance in comparative example 1 being 100. In the results, the less the value is, the more excellent wet grip performance is. Furthermore, the results at an initial stage of wear, an intermediate stage of wear, and an end stage of wear are indicated.
Road surface: asphalt road surface having a water depth of 0.5 to 2.0 mm
Vehicle: 10-ton truck (loaded with cargo corresponding to 75% of standard payload)
Braking distance: distance until stop of the vehicle running at a speed of 65±2 km/h

Table 1 indicates the test results.

**[Table 1]**

| | Comp. Ex. 1 | Comp. Ex. 2 | Comp. Ex. 3 | Comp. Ex. 4 | Ex. 1 | Ex. 2 | Ex. 3 | Ex. 4 | Ex. 5 |
|---|---|---|---|---|---|---|---|---|---|
| D2/D1 (%) | 100 | - | - | 50 | 35 | 50 | 55 | 50 | 50 |
| A2/A1 (%) | 100 | - | - | 40 | 20 | 40 | 60 | 40 | 40 |
| d1 (mm) | - | 20 | 10 | - | 6.5 | 5 | 4.5 | 3.3 | 6.6 |
| d2 (mm) | - | - | 10 | - | 6.5 | 5 | 4.5 | 6.6 | 3.3 |
| d1/d2 (%) | - | - | 100 | - | 100 | 100 | 100 | 50 | 200 |
| Rolling resistance performance [index, the less the value is, the better the performance is] | 100 | 80 | 80 | 85 | 80 | 83 | 85 | 85 | 80 |
| Wet grip performance at initial stage of wear [index, the less the value is, the better the performance is] | 100 | 110 | 110 | 100 | 100 | 100 | 100 | 100 | 100 |
| Wet grip performance at intermediate stage of wear [index, the less the value is, the better the performance is] | 100 | 105 | 110 | 110 | 100 | 100 | 100 | 100 | 100 |
| Wet grip performance at end stage of wear [index, the less the value is, the better the performance is] | 100 | 105 | 100 | 110 | 100 | 100 | 100 | 100 | 100 |

According to the test results, it was confirmed that the tires of the examples exhibited excellent rolling resistance performance and wet grip performance.

## Claims

1. A tire (1) comprising
a tread portion (2), wherein
the tread portion (2) includes a plurality of circumferential grooves (3) extending continuously in a tire circumferential direction,
the circumferential grooves (3) include a pair of shoulder circumferential grooves (3A), and at least one middle circumferential groove (3B) disposed between the pair of shoulder circumferential grooves (3A),
a groove depth (D2) of the middle circumferential groove (3B) is less than a groove depth (D1) of each of the shoulder circumferential grooves (3A), and
in a groove bottom (5B) of the middle circumferential groove (3B), a circumferential sipe (7) extending inwardly from the groove bottom (5B) in a tire radial direction, and a circumferential width-increased portion (9) extending inwardly from the circumferential sipe (7) in the tire radial direction and extending in the tire circumferential direction with a width (w2) greater than a width of the circumferential sipe (7), are formed,
the tread portion (2) includes land portions (4) demarcated by the circumferential grooves (3), and
the land portions (4) include two or more inner land portions (4B) demarcated by the middle circumferential groove (3B) between the pair of shoulder circumferential grooves (3A),
**characterized in that**
at least one of the inner land portions (4B) includes an axial sipe (15) extending in the tire axial direction, and an axial width-increased portion (16) extending inwardly from the axial sipe (15) in the tire radial direction and extending in the tire axial direction with a width (w4) greater than a width of the axial sipe (15).

2. The tire (1) according to claim 1, wherein the circumferential sipe (7) is disposed only in the groove bottom (5B) of the middle circumferential groove (3B).

3. The tire (1) according to claim 1 or 2, wherein the middle circumferential groove (3B) is disposed in a range defined from a tire equator (C) toward both sides in a tire axial direction so as to be less than or equal to 35% of a tread width (TW), wherein the tread width (TW) represents a distance in the tire axial direction between tread ends (Te) of the tire (1) in a normal state, the normal state representing a state in which the tire (1) is mounted on a normal rim and is inflated to a normal internal pressure, and the tread ends (Te) representing the outermost ground contact positions in the tire axial direction in a state where a normal load is applied to the tire (1) in the normal state and the tire (1) is in contact with a plane at a camber angle of 0°.

4. The tire (1) according to any one of claims 1 to 3, wherein the width (w2) of the circumferential width-increased portion (9) is less than a groove width (W2) of the middle circumferential groove (3B).

5. The tire (1) according to any one of claims 1 to 4, wherein a cross-sectional area (A2) of the middle circumferential groove (3B) is 20% to 60% of a cross-sectional area (A1) of each shoulder circumferential groove (3A).

6. The tire (1) according to any one of claims 1 to 5, wherein a cross-sectional area (A3) of the circumferential width-increased portion (9) is 8% to 24% of the cross-sectional area (A1) of each shoulder circumferential groove (3A).

7. The tire (1) according to any one of claims 1 to 6, wherein a depth (d1) of the circumferential sipe (7) is 0.5 to 2.0 times a depth (d2) of the circumferential width-increased portion (9).

8. The tire (1) according to any one of claims 1 to 7, wherein the axial sipe (15) is continuous with a corresponding one of the shoulder circumferential grooves (3A) or the middle circumferential groove (3B).

9. The tire (1) according to any one of claims 1 to 8, wherein the axial width-increased portion (16) is continuous with the circumferential sipe (7) or a corresponding one of the shoulder circumferential grooves (3A).

10. The tire (1) according to any one of claims 1 to 9, wherein a depth (d3) of the axial sipe (15) is 90% to 110% of the groove depth (D2) of the middle circumferential groove (3B).

11. The tire (1) according to any one of claims 1 to 10, wherein a depth (d4) of the axial width-increased portion (16) is 90% to 110% of the depth (d1) of the circumferential sipe (7).

12. The tire (1) according to any one of claims 1 to 11, wherein the axial sipe (15) is disposed at an angle θ1 of not greater than 30° relative to the tire axial direction.

## Patentansprüche

1. Reifen (1), umfassend
einen Laufflächenabschnitt (2), wobei
der Laufflächenabschnitt (2) mehrere Umfangsrillen (3) aufweist, die sich kontinuierlich in einer Reifenumfangsrichtung erstrecken,
die Umfangsrillen (3) ein Paar von Schulterumfangsrillen (3A) und zumindest eine Mittelumfangsrille (3B) umfassen, die zwischen dem Paar von Schulterumfangsrillen (3A) angeordnet ist,
eine Rillentiefe (D2) der Mittelumfangsrille (3B) kleiner als eine Rillentiefe (D1) jeder der Schulterumfangsrillen (3A) ist und
in einem Rillenboden (5B) der Mittelumfangsrille (3B) ein umlaufender Feinschnitt (7), der sich von dem Rillenboden (5B) in einer Reifenradialrichtung nach innen erstreckt, und ein umlaufender breitenvergrößerter Abschnitt (9), der sich von dem umlaufenden Feinschnitt (7) in der Reifenradialrichtung nach innen erstreckt und der sich in der Reifenumfangsrichtung mit einer Breite (w2) größer als eine Breite des umlaufenden Feinschnitts (7) erstreckt, gebildet sind,
der Laufflächenabschnitt (2) Landabschnitte (4) aufweist, die durch die Umfangsrillen (3) begrenzt sind, und
die Landabschnitte (4) zwei oder mehr innere Landabschnitte (4B) umfassen, die durch die Mittelumfangsrille (3B) zwischen dem Paar von Schulterumfangsrillen (3A) begrenzt sind,
**dadurch gekennzeichnet, dass**
zumindest einer der inneren Landabschnitte (4B) einen axialen Feinschnitt (15), der sich in der Reifenaxialrichtung erstreckt, und einen axialen breitenvergrößerten Abschnitt (16) aufweist, der sich von dem axialen Feinschnitt (15) in der Reifenradialrichtung nach innen erstreckt und der sich in der Reifenaxialrichtung mit einer Breite (w4) größer als eine Breite des axialen Feinschnitts (15) erstreckt.

2. Reifen (1) nach Anspruch 1, wobei der umlaufende Feinschnitt (7) nur in dem Rillenboden (5B) der Mittelumfangsrille (3B) angeordnet ist.

3. Reifen (1) nach Anspruch 1 oder 2, wobei die Mittelumfangsrille (3B) in einem Bereich angeordnet ist, der ausgehend von einem Reifenäquator (C) in Richtung beider Seiten in einer Reifenaxialrichtung derart definiert ist, dass er kleiner als oder gleich 35% einer Laufflächenbreite (TW) ist, wobei die Laufflächenbreite (TW) eine Distanz in der Reifenaxialrichtung zwischen Laufflächenenden (Te) des Reifens (1) in einem Normalzustand darstellt, wobei der Normalzustand einen Zustand darstellt, in welchem der Reifen (1) an einer Normalfelge angebracht ist und bis auf einen normalen Innendruck aufgepumpt ist, und wobei die Laufflächenenden (Te) die äußersten Bodenkontaktpositionen in der Reifenaxialrichtung in einem Zustand darstellen, in welchem eine Normallast auf den Reifen (1) in dem Normalzustand ausgeübt wird und der Reifen (1) mit einer Ebene unter einem Sturzwinkel von 0° in Kontakt steht.

4. Reifen (1) nach einem der Ansprüche 1 bis 3, wobei die Breite (w2) des umlaufenden breitenvergrößerten Abschnitts (9) kleiner als eine Rillenbreite (W2) der Mittelumfangsrille (3B) ist.

5. Reifen (1) nach einem der Ansprüche 1 bis 4, wobei eine Querschnittsfläche (A2) der Mittelumfangsrille (3B) 20% bis 60% einer Querschnittsfläche (A1) jeder Schulterumfangsrille (3A) beträgt.

6. Reifen (1) nach einem der Ansprüche 1 bis 5, wobei eine Querschnittsfläche (A3) des umlaufenden breitenvergrößerten Abschnitts (9) 8% bis 24% der Querschnittsfläche (A1) jeder Schulterumfangsrille (3A) beträgt.

7. Reifen (1) nach einem der Ansprüche 1 bis 6, wobei eine Tiefe (d1) des umlaufenden Feinschnitts (7) das 0,5- bis 2,0-fache einer Tiefe (d2) des umlaufenden breitenvergrößerten Abschnitts (9) beträgt.

8. Reifen (1) nach einem der Ansprüche 1 bis 7, wobei der axiale Feinschnitt (15) mit einer entsprechenden der Schulterumfangsrillen (3A) oder der Mittelumfangsrille (3B) kontinuierlich ist.

9. Reifen (1) nach einem der Ansprüche 1 bis 8, wobei der axiale breitenvergrößerte Abschnitt (16) mit dem umlaufenen Feinschnitt (7) oder mit einer entsprechenden der Schulterumfangsrillen (3A) kontinuierlich ist.

10. Reifen (1) nach einem der Ansprüche 1 bis 9, wobei eine Tiefe (d3) des axialen Feinschnitts (15) 90% bis 110% der Rillentiefe (D2) der Mittelumfangsrille (3B) beträgt.

11. Reifen (1) nach einem der Ansprüche 1 bis 10, wobei eine Tiefe (d4) des axialen breitenvergrößerten Abschnitts (16) 90% bis 110% der Tiefe (d1) des umlaufenden Feinschnitts (7) beträgt.

12. Reifen (1) nach einem der Ansprüche 1 bis 11, wobei der axiale Feinschnitt (15) bezogen auf die Reifenaxialrichtung unter einem Winkel θ1 von nicht mehr als 30° angeordnet ist.

## Revendications

1. Pneumatique (1) comprenant
une portion formant bande de roulement (2), dans lequel la portion formant bande de roulement (2) inclut une pluralité de rainures circonférentielles (3) s'étendant en continu dans une direction circonférentielle du pneumatique,
les rainures circonférentielles (3) incluent une paire de rainures circonférentielles d'épaulement (3A), et au moins une rainure circonférentielle médiane (3B) disposée entre la paire de rainures circonférentielles d'épaulement (3A),
une profondeur de rainure (D2) de la rainure circonférentielle médiane (3B) est inférieure à une profondeur de rainure (D1) de chacune des rainures circonférentielles d'épaulement (3A), et
dans un fond de rainure (5B) de la rainure circonférentielle médiane (3B), une fente circonférentielle (7) s'étendant vers l'intérieur depuis le fond de rainure (5B) dans une direction radiale du pneumatique, et une portion circonférentielle augmentée en largeur (9) s'étendant vers l'intérieur depuis la fente circonférentielle (7) dans la direction radiale du pneumatique et s'étendant dans la direction circonférentielle du pneumatique avec une largeur (w2) supérieure à une largeur de la fente circonférentielle (7), sont formées,
la portion formant bande de roulement (2) inclut des portions en relief (4) délimitées par les rainures circonférentielles (3), et
les portions en relief (4) incluent deux ou plusieurs portions en relief intérieures (4B) délimitées par la rainure circonférentielle médiane (3B) entre la paire de rainures circonférentielles d'épaulement (3A),
**caractérisé en ce que**
l'une au moins des portions en relief intérieures (4B) inclut une fente axiale (15) s'étendant dans la direction axiale du pneumatique, et une portion axiale augmentée en largeur (16) s'étendant vers l'intérieur depuis la fente axiale (15) dans la direction radiale du pneumatique et s'étendant dans la direction axiale du pneumatique avec une largeur (w4) supérieure à une largeur de la fente axiale (15).

2. Pneumatique (1) selon la revendication 1, dans lequel la fente circonférentielle (7) est disposée uniquement dans le fond de rainure (5B) de la rainure circonférentielle médiane (3B).

3. Pneumatique (1) selon la revendication 1 ou 2, dans lequel la rainure circonférentielle médiane (3B) est disposée dans une plage définie par un équateur de pneumatique (C) vers les deux côtés dans une direction axiale du pneumatique de manière à être inférieure ou égale à 35 % d'une largeur de bande de roulement (TW), dans lequel la largeur de bande de roulement (TW) représente une distance dans la direction axiale du pneumatique entre des extrémités de bande de roulement (Te) du pneumatique (1) dans un état normal, l'état normal représentant un état dans lequel le pneumatique (1) est monté sur une jante normale et est gonflé à une pression interne normale, et les extrémités de bande de roulement (Te) représentant les positions de contact au sol les plus à l'extérieur dans la direction axiale du pneumatique dans un état dans lequel une charge normale est appliquée au pneumatique (1) dans l'état normal et dans lequel le pneumatique (1) est en contact avec un plan sous un angle de cambrure de 0°.

4. Pneumatique (1) selon l'une quelconque des revendications 1 à 3, dans lequel la largeur (w2) de la portion circonférentielle augmentée en largeur (9) est inférieure à une largeur de rainure (W2) de la rainure circonférentielle médiane (3B).

5. Pneumatique (1) selon l'une quelconque des revendications 1 à 4, dans lequel une aire de section transversale (A2) de la rainure circonférentielle médiane (3B) est de 20 % à 60 % d'une aire de section transversale (A1) de chaque rainure circonférentielle d'épaulement (3A).

6. Pneumatique (1) selon l'une quelconque des revendications 1 à 5, dans lequel une aire de section transversale (A3) de la portion circonférentielle augmentée en largeur (9) est de 8 % à 24 % de l'aire de section transversale (A1) de chaque rainure circonférentielle d'épaulement (3A).

7. Pneumatique (1) selon l'une quelconque des revendications 1 à 6, dans lequel une profondeur (d1) de la fente médiane (7) est de 0,5 à 2,0 fois une profondeur (d2) de la portion circonférentielle augmentée en largeur (9).

8. Pneumatique (1) selon l'une quelconque des revendications 1 à 7, dans lequel la fente axiale (15) se prolonge avec une rainure correspondante des rainures circonférentielles d'épaulement (3A) ou de la rainure circonférentielle médiane (3B).

9. Pneumatique (1) selon l'une quelconque des revendications 1 à 8, dans lequel la portion axiale augmentée en largeur (16) se prolonge avec la fente circonférentielle (7) ou une rainure correspondante des rainures circonférentielles d'épaulement (3A).

10. Pneumatique (1) selon l'une quelconque des revendications 1 à 9, dans lequel une profondeur (d3) de la fente axiale (15) est de 90 % à 110 % de la profondeur de rainure (D2) de la rainure circonférentielle médiane (3B).

11. Pneumatique (1) selon l'une quelconque des revendications 1 à 10, dans lequel une profondeur (d4) de la portion axiale augmentée en largeur (16) est de 90 % à 110 % de la profondeur (d1) de la fente circonférentielle (7).

12. Pneumatique (1) selon l'une quelconque des revendications 1 à 11, dans lequel la fente axiale (15) est disposée sous un angle θ1 qui n'est pas supérieur à 30° relativement à la direction axiale.
